# EUROPEAN PATENT APPLICATION

(11) **EP 0 748 087 A1**
(43) Date of publication of application: **11.12.1996**
(21) Application number: 95480070.2
(22) Date of filing: 09.06.1995
(51) Int. Cl.: H04L 12/56

(54) **Access control system for a shared buffer**

(71) Applicant: INTERNATIONAL BUSINESS MACHINES CORPORATION, Armonk, N.Y. 10504 (US)
(72) Inventor: Galand, Claude, F-06800 Cagnes-sur-Mer (FR); Austruy, Pierre, F-06100 Nice (FR); Fichou, Aline, F-06480 La Colle-sur-Loup (FR); Iliadis, Ilias, CH-8803 Rüschlikon (CH)
(74) Representative: Lattard, Nicole

(57) **Abstract**

An improved access control system for a common or global data storage supporting virtual output queues dedicated to each of the output lines of the storage is described for data of different priorities. The improvement consisting in having thresholds for each priority class with respect to the global occupation level of the storage and to the occupation level of each virtual queue. The new access control system enables a contention control. It further includes the generation of a backpressure signal for the data transmitting input as to indicate the success of the transmission. This signal can be reduced to a single bit irrespective of the number of thresholds and priority classes.

## Description

The invention relates to an access control system for a shared buffer or memory. It particularly pertains to such an access control system for a buffer for storing data with different priorities, said buffer having a shared part and a plurality of dedicated parts. Even more specifically it relates to a switch for handling data traffic between a plurality of input and output ports.

### BACKGROUND OF THE INVENTION

Fast switching of information evolves to an increasingly important factor in a broad field of applications ranging from parallel multiprocessor computing to networks for global telecommunication. In spite of the obvious differences in scale and purpose, these applications share fundamental problems growing from the high degree of parallelism involved. Among the most basic problems encountered are those of coordination and contention.

With an ever increasing number of participants sharing common media, independently from whether the media are microprocessors, data storages, data buses, copper wires or optical fibers, the coordination of access among these participants becomes an intricate task. Solutions to this task must be seen under the premises of an entire independence of the participants who are only interacting at the very moment they try to gain access to the shared medium.

Deeply interwoven with the problem of coordination is the problem of contention. As a full parallelism of all resources is undesired and uneconomical, the shared resources inevitably form bottlenecks of the involved process. In case of two or more users or participants simultaneously accessing a shared medium, a decision concerning preferences has to be made. The problem of contention, if not solved by a higher degree of parallelism or redundancy, has been tackled in the prior art through basically two mechanisms. These mechanisms can be characterized by being either of statistical nature or using a priority setting. Though the statistical approach is successfully applied in various devices (FIFO - type buffer, CSMA/CD - type data communication protocols, etc.), tendencies towards access schemes with a higher degree of determinism are noticeable. The efforts aimed at the future public Broadband Integrated Services Digital Network (BISDN) provide an illustrative example for these tendencies. Integrated services networks are designed to equally support voice, video and data transmission. These different types of information, being in one case delay sensitive, and of a more bursty character in the other, demand for a different way of handling. A natural solution to the contention problem is therefore found in classifying different types of information into priority categories or equivalents thereof. A classification tag is attached to the "pure" information (payload) triggering the desired way of handling the information classified in this manner. As an example, video and audio applications might be classified as having a high priority, and file transfers and e-mail as low priority traffic.

Before returning to the problems described above, the field of telecommunication will be shortly introduced for the reason of being the predominant area in which high-speed data switches are applied. Developments in this area usually are considered state-of-the-art models for all related fields.

As already indicated above, new and sophisticated telecommunication services like BISDN are giving rise to supporting multimedia applications, including the transmission of data, voice, and video. These services require a high degree of flexibility in bandwidth, which is found to be best provided by packet switching due to its capability to allocate bandwidth dynamically and instantaneously and to efficiently utilize resources by multiplexing. In particular, the Asynchronous Transfer Mode (ATM) which is based on short, fixed-length packets of data, called cells, is expected to be applied as the integrated switching and transmission standard for the future public BISDN. For private networks both ATM and Fast Packet Switching (FPS) based on variable-length packets are under consideration. The desired data transfer rates surpass the 100 Mbit/s limit to peak beyond 1 Gbit/s. Currently, maximum transfer rates of 2.4 Gbit/s are projected. These rates are influenced by the evolution of optical transmission standards such as SONET/SDH.

Advances in Very Large Scale Integration (VLSI) microchip technology allow the development of high-speed switches able to accommodate the future transmission rates. As opposed to conventional packet switches, which are mainly based on software processing, these new advanced packet switches are hardware-based. Their topologies and buffer arrangements for contention resolution employ a high degree of modularity. Their routing function is typically performed in a distributed way at the hardware level which is referred to as self-routing. Examples for advanced packet switching fabrics are known from the following documents.

In the patent US-A-4679190, a multi-stage interconnection network (MIN) is described capable of switching synchronous and asynchronous data packets while insuring that packets with the highest assignable priority will not be blocked at any stage of the switching network. Packets carrying voice information are given a higher priority than other data. The case of contention at any stage of the switch fabric is resolved by letting the packet with higher priority pass first. The data with low priority is blocked and remains in a data buffer of the input adapter (port). Providing buffer space, i.e. memory, at the input adapter is generally known as input queueing. Collisions of packets having the same priority are handled by an arbitration section in accordance with predetermined rules or with a round robin scheme.

The classical input queueing, described above, achieves an inferior throughput than output queueing from a performance point of view. This performance advantage is exploited in a switch as described in US-A-5008878. The basic switch configuration consists of input adapters connected to the switch fabric via input ports. The output ports of the switch fabric are linked to output adapters. At the input adapters, various services from packet switched and circuit switched interfaces (traffic from computers, telephone, and other sources) are collected and converted into uniform minipackets with a packet header, containing routing information designating the desired output port, the length of the payload, and the priority class of the payload. Depackaging is performed at the output adapter. The switch fabric itself is a fast self-routing interconnection network. To each output port a pair of FIFO queueing buffer is assigned. The first buffer of each pair queues the high priority traffic, which must be dispatched within a given cycle time, i.e., circuit switched traffic or required bandwidth traffic, and the second buffer serves low priority or non-reserved bandwidth traffic. The priority scheme is enforced by serving the high priority queue first. Only if no packet is waiting in this queue the second buffer can be connected to the output port.

In an article in the IBM Technical Disclosure Bulletin, vol. 32, no. 10B, March 1990, pp 176-177 entitled "Packet Switching Module", and in the European patent applications EP-A-0492025 and EP-A-0492026, methods for dynamically allocating buffer space to single output port from a common output storage are described, relaxing further the output port contention, particularly for bursty data traffic. In a variant of this buffer management system, part of the memory space may be reserved to one output line. This "virtual" dedicated buffer is not available for data of another output line or port, thus introducing the concept of dedictated buffer also to common output storage systems. The common buffer usually run at a higher speed than the peripheral devices to be able to resolve output port contention, i.e. to be able to accept input data from multiple inputs during one system clock cycle.

From several other sources, as for example from I. Iliadis and W. Denzel, "Performance of Packet Switches with Input and Output Queueing", IEEE International Conference on Communication, April 16-19, 1990, pp. 316.3.1-7, I. Iliadis, "Head of Line Arbitration of Packet Switches with Combined Input and Output Queueing", Intern. Journal of Digital and Analog Comm. Syst., Vol. 4(1991), pp. 181-190, or H.F. Badran and H.T. Mouftah, "Head of Line Arbitration in ATM Switches with Input-Output Buffering and Backpressure Control", Proc. of GLOBECOM'91, Phoenix, Az., Dec. 2-5, 1991, pp. 11.4.1-5, a combination of input and output queueing is suggested with the aim of achieving a high performance/cost ratio by combining moderate amounts of highly efficient, but more expensive output memory with larger amounts of memory at the inputs, which is significantly less expensive but also less efficient. The size of the buffers is predominantly determined by the desired probability of data packet loss. The concept of a combined input and output queueing can be extended to the case of buffered multistage fabrics with each of the stages being supplied with (input) queues of their own.

Overflow of the output buffer is treated by a backpressure mechanism which prevents the transmission of incoming packets for the period in which the output buffer can not provide sufficient space. It is enforced by a backpressure signal which causes the packet to either be discarded or wait at the head of the input line until the backpressure situation is resolved.

In case of different classes of traffic several proposals are known which describe the conditions under which a backpressure signal is generated. The most pertinent to the current invention is know as "partial buffer sharing". It is conceptually described for example by A. Lin and J. Sylvester In: IEEE Journal on Selected Areas in Communications, Vol.9, No. 9, December 1991, pp.1524-1536. The partial buffer sharing method is based on introducing limits or thresholds on the buffer space available to all classes of traffic. When these limits are exceeded, only data of higher classes are admitted to the buffer. Thus, each traffic class can be associated with a different class of traffic.

An implementation of this concept is described for example in the European Patent application EP-A-0 639 014. This implementation involves a first (intermediate) buffer and a second buffer. The occupation level of the second buffer is monitored, and incoming data cells of a certain priority class are rejected as soon as the threshold associated with this class is exceeded.

Known applications of the partial buffer sharing are however up to now restricted to simple buffer structures, e.g. FIFOs queues. It is therefore an object of the invention to improve the known partial buffer sharing system such as to be applicable to a complex buffer structure wherein the buffer space for an output line is dynamically allocated within a common buffer space. It is a particular object of the invention to introduce such a system for generating a backpressure signal for input peripherals.

### SUMMARY OF THE INVENTION

The above mentioned objects are achieved by the invention as set forth in the appended claims.

It is seen as a first important feature of the invention that associated with each class of traffic or service there are at least two thresholds. One threshold is applied to the occupation level of the (global) storage. The other thresholds are monitored in connection with the occupation level of each of the dynamically allocated parts of the storage which serve one of the output lines. Thus even when the storage contains data destined for only one of the output lines, two thresholds are monitored for deciding on whether to accept incoming data or not. If the storage contains data waiting for transmission to more than one output line, the number of relevant threshold for each of the classes increases accordingly. Furthermore can the thresholds associated with one class of traffic take different values for different output lines.

Hence, compared to the prior art, the current invention offers a larger number of conditions under which incoming data can be rejected. By monitoring not only the main or global storage occupation but in addition each dedicated part, the contention or competition for the global storage among all output lines can be controlled.

This refinement is advantageously exploited in a preferred embodiment of the invention, which includes means for determining the output line of a received data. The decision of whether to reject the received data can be based on the overall occupation level of the storage or on the occupation level of the part of the storage which is dedicated to the respective output port. In this embodiment, a received data is rejected when the threshold associated with the respective traffic class of the data is reached or exceeded either in the storage or its respective dedicated part. To this end, the outputs of the threshold monitor for the dedicated part and for the overall storage are subject to a Boolean OR operation. In connection with this embodiment of the invention, it should be noted that means for determining the output line of a received data is a prerequisite of any multiple output memory. Hence, the current embodiment makes use of existing means, though for a different purpose. As a consequence, the required additional amount of circuitry to implement this embodiment is reduced.

In a further preferred embodiment of the invention, the signal which is retransmitted to the input line to indicate an unsuccessful transmission of data to the storage is reduced to one bit irrespectively of the number of thresholds and traffic classes. With respect to an ever increasing number of I/O ports and a limitation in the number of I/O pins dictated by current chip design technology, this embodiment provides an important advantage.

The above and other advantageous features of the invention will be apparent from the following drawings and related description of an embodiment of the invention, the adaptation of which to other known and future designs and technical fields should pose a trivial task for a skilled person.

### DESCRIPTION OF THE DRAWINGS

The invention is described in detail below with reference to the following drawings:
- **FIG. 1**: shows the basic structure of a switch with input and output port adapters and a shared output buffer to which the invention is applied.
- **FIG. 2**: shows a detailed view of the control section of the shared output buffer of Fig. 1 with elements of the invention.

### MODE(S) FOR CARRYING OUT THE INVENTION

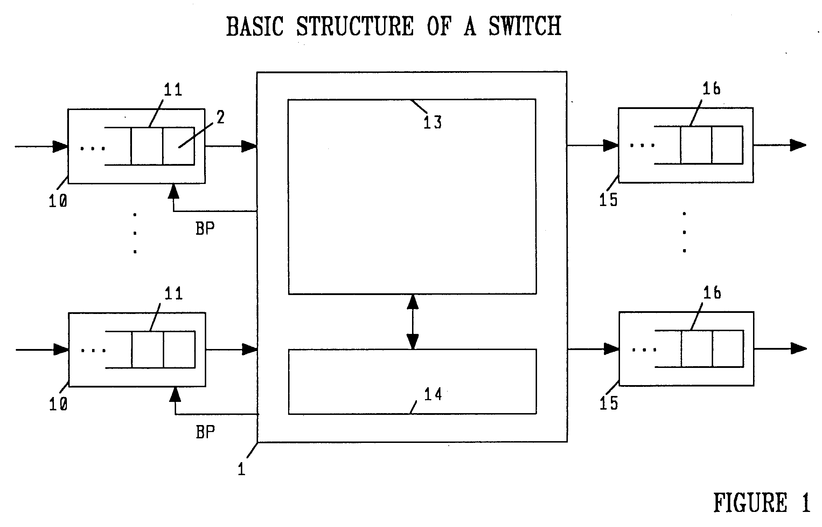

A possible use of the current invention is demonstrated in the following referring to a communication switch as shown in Fig. 1. The general *k* × *l* switch structure **1** comprises k input lines and l output lines, with k and l both equalling 16 in the present example. Describing firstly the input adapters or ports **10**, each formats, if necessary, the incoming data stream and provides the formated, i.e, packetized data with a so-called header which includes routing information to guide the data through the following switch fabric to the correct output port. Also included in the header are priority class information, which determine the class of traffic the data belongs to. The adapter section is also recipient of a backpressure signal **BP**, generated in the following switch in case of overflow as will be described in greater detail below. Each adapter has a buffer **11** to store arriving packets of data. Single storage units within the buffer memory are referred to as cells **2**. This definition is chosen with respect to the name of data packets in Asynchronous Transfer Mode (ATM) traffic.

The switch itself comprises a memory section **13** to store the incoming data for further transmission to the following output ports. By utilizing the information contained in the header section of the incoming data and a proper management of the storage addresses (pointers), the memory is organized such as to contain a number of virtual or logical FIFO queues, each exclusively assigned to one of the output adapters. All unoccupied (free) memory space in the memory can be in principle used by any incoming data, thus elongating the queue dedicated to its target output. A control section **14** manages and distributes the available memory addresses to this end. Its precise structure may be derived from the relevant literature cited in the introductory part of this description. It is yet important to note that the described control section keeps track of all address pointers and can therefore easily be exploited to monitor thresholds in both the global storage space and each dedicated output queue.

The output port adapters **15** reformat the data for subsequent processing or transmission. The output adapters of this example comprise another buffer **16** for storage of data. These however may not be confused wit the output queues in the switch memory.

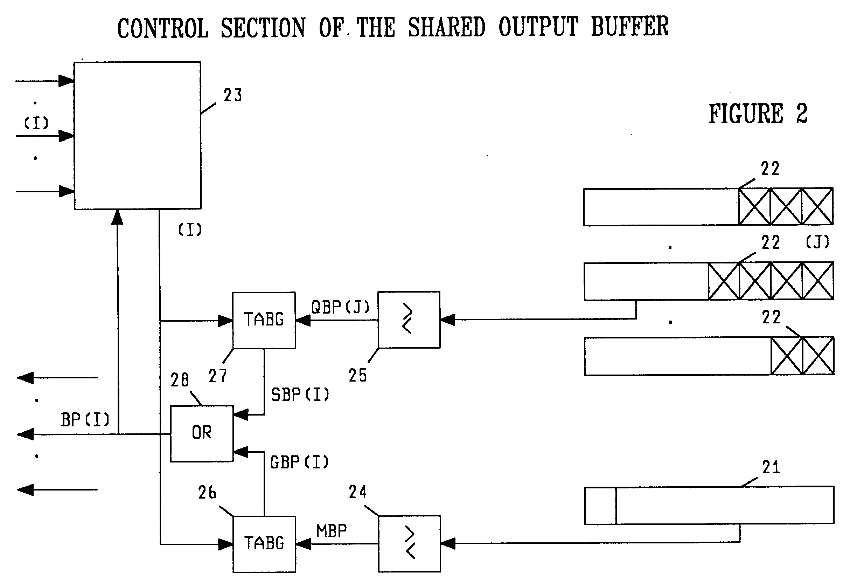

Elements of the invention are described in the following making reference to Fig. 2., which shows the control section **14** of the switch memory in greater detail. However only one of the 16 output queues and the free pointer queue is depicted as all other queues are connected analogeously.

The control section comprises pointer queues **21, 22** for storing address pointers to memory locations or cells of the global storage **13**. One queue **21** contains the pointers to all free locations, the other queues **22** store pointers to cells which are current occupied. As each of latter is assigned to one of the output ports, in fact they establish the dedicated output queues within the global memory as mentioned above. As the pointer queues in the global memory are of the FIFO (first in first out) type, the respective dedicated queues in the buffer are of the same type, even though the data belonging to one queue will in most cases be stored at random locations within the memory.

The control section further comprises a header processing section **23** which receives the header of the incoming data cell and extracts the target output port therefrom. After having established the output port, a pointer from the free pointer queue **21** is fetched and added to the end of the pointer queue **22** assigned to this output port. The data cell is stored in the storage **13** at the address indicated by the pointer. The data associated with those pointers at the top of the dedicated pointer queues are read out while the respective pointer, which now points to a free address in the storage, is added to the end of the free pointer queue **21**.

Apart from these known functions of the control section, following elements are used to implement the current invention.

A comparator circuit **24, 25** for monitoring the occupation level of each queue **21, 22** and for comparing it with the preset thresholds. The output **MBP, QBP** of the comparator is used for a look-up operation **26, 27**, which also involves the class of traffic as established for each arriving data cell in the header processing section **23**. This operation, which is explained in detail below, results in a one-bit output, i.e. in the **SBP(i)** signal for a dedicated queue or in the **GBP(i)** signal for the free pointer queue, which is monitored to determine the overall occupation of the global storage **13**. (Here and in the following the global backpressure signal is also indexed to indicate that even though it is is derived from the global storage occupation, its value also depends on the class of traffic currently transmitted by each of the input lines.) The(active) input port i which has transmitted the cell and the header processing section **23** receive both the backpressure signal which is the output of an OR operation **28** on SBP(i) and GBP(i). If the signal is low, the header processing section performs the storing procedure as described above; if the signal is high, the storage is blocked and the input port adapter will store the transmitted data cell for retransmission.

In the following the comparator **24, 25** and the look-up operation **26, 27** are further described assuming the existence of three classes of traffic, i.e., real-time reserved-bandwidth traffic (RT), non-real-time reserved-bandwidth traffic (NRT), and non-reserved-bandwidth traffic (NR).

At each switch cycle, each input adapter sends a switch cell to the switch (if there is a cell to transmit). The back-pressure signal sent back by the switch to adapter i (i = 1,..., 16) is denoted by BP(i). The BP(i) signal is computed by the BP generation section using the binary signals GBP(i) and SBP(i), which represent the global and selective backpressure, repectively, according to the relation
BP(i) = GBP(i) OR SBP(i)

In the following, the evaluation done by control section for GBP and SBP signals for each input port, at each switch cycle is described:

For the global back pressure per priority class (common memory), the threshold monitor keeps track of the variable MBP which is determined from the number n of cells in the storage and the three thresholds T(rt), T(nrt), T(nr) according to:
MBP = 0: if *n* < *T*(*nr*) (no threshold is reached)
MBP = 1: if *T*(*nr*) ≦ *n* < *T*(*nrt*) (NR threshold is reached)
MBP = 2: if *T*(*nrt*) ≦ *n* < *T*(*rt*) (NRT threshold is reached)
MBP = 3: if *T*(*rt*) ≦ *n* (RT threshold is reached)

The global back-pressure GBP(i) for port i is determined as follows.

The class of traffic of the data received from adapter i, and the variable MBP are used to look-up the binary value of GBP(i) in the 3x4 table TABG, i.e.
GBP(i) = TABG(class of traffic of the cell received from port i, MBP),
wherein the class of traffic is coded as:
- 0: real-time reserved-bandwidth traffic
- 1: non-real-time reserved-bandwidth traffic
- 2: non-reserved-bandwidth traffic
and the look-up table TABG is defined as:

| TABG (I,J) | J = 0 | J = 1 | J = 2 | J = 3 |
|---|---|---|---|---|
| I = 0 | 0 | 0 | 0 | 1 |
| I = 1 | 0 | 0 | 1 | 1 |
| I = 2 | 0 | 1 | 1 | 1 |

As is easily seen, as a general principle lower priority traffic is rejected in favor of higher one.

The selective back pressure per priority class (dedicated output queues) signal is determined by thresholds in the pointer queues dedicated to the output ports.

For each logical output queue, the backpressure signal generator keeps track of a two-bit variable QBP(j), j = 1, ..., 16, which is determined from the number n(j) of cells in the global memory, to be forwarded to output port j. The variables QBP(j) are determined from 3 different thresholds: TQ(rt), TQ(nrt), and TQ(nr):
QBP(j) = 0 : if *n*(*j*) < *TQ*(*nr*) (no threshold is reached);
QBP(j) = 1 : if *TQ*(*nr*) ≦ *n*(*j*) < *TQ*(*nrt*) (NR threshold is reached);
QBP(j) = 2 : if *TQ*(*nrt*) ≦ *n*(*j*) < *TQ*(*rt*) (NRT threshold is reached);
QBP(j) = 3 : if *TQ*(*rt*) ≦ *n*(*j*) (RT threshold is reached).

The selective back pressure signal SBP(i) is determined as follows: The class of traffic of the cell received from adapter i, and the destination j of the cell are used to look-up the binary value of SBP(i) in the 3x4 table TABG, i.e.
SBP(i) = TABG(class of traffic of the cell received from port i, QBP(j)),
wherein TABG denotes the same table as used for calculating the global backpressure signal.

As described above, a single bit backpressure can now be derived by an OR operation on SBP(i) and GBP(i).

## Claims

1. Access control system for a storage (**13**) used for storing at least two different classes of data traffic; said storage having a plurality of input lines (**10**) and output lines (**15**) and storage control means (**14**) for dynamically allocating part of said storage to said output lines, and for monitoring the occupation level of said storage and of each allocated part of said storage,
said access control system being characterized by having
distinct thresholds for each of said traffic classes in said storage and in each allocated part of said storage,
means (**23**) for determining a traffic class of data received from a one of said input lines,
means (**23**) for denying access to said incoming data if a threshold associated with said traffic class is reached, and
means for transmitting a signal (**BP**) to said one of said input lines indicating an unsuccessful access attempt.

2. The access system of claim 1, further including means (**23**) for determining the output line (**15**) of the received data, and wherein the means for denying access are reponsive to the thresholds associated with said traffic class in the storage and in each of the allocated parts of the storage, such denying access to the received data for said output line, if the threshold in the part of the storage allocated to said output line is reached, and to received data irrespectivly of the output line, if the threshold of the storage is reached.

3. The access control system of claim 1, further comprising means (**26, 27, 28**) for reducing the signal (**BP(i)**) transmitted to said one of said input lines indicating an unsuccessful access attempt to one bit irrespectively of the number of thresholds.

4. The access control system of claim 1 in a data packet switch having input and output port adapters (**10, 15**).

5. Access control method for a storage (**13**) used for storing at least two different classes of data traffic; said storage having a plurality of input lines (**10**) and output lines (**15**) and storage control means (**14**) for dynamically allocating part of said storage to said output lines, and for monitoring the occupation level of said storage and of each allocated part of said storage,
said access control method being characterized by the steps of
assigning distinct thresholds for each of said traffic classes in said storage and in each allocated part of said storage,
determining a traffic class of data received from a one of said input lines,
denying access to said incoming data if a threshold associated with said traffic class is reached, and
transmitting a signal (**BP(i)**) to said one of said input lines indicating an unsuccessful access attempt.

6. The access control method of claim 5, further including the step of determining the output line (**15**) of the received data and denying access to the received data for said output line, if the threshold in the part of the storage allocated to said output line is reached, and to received data irrespectivly of the output port, if the threshold of the storage is reached.

7. The access control method of claim 6, wherein the the signal (**BP**) transmitted to said one of said input lines indicating an unsuccessful access attempt is one bit irrespectively of the number of thresholds.

8. The access control method of claim 5 applied to a packet switch having input and output port adapters (**10, 16**).
